# EUROPEAN PATENT APPLICATION

(11) **EP 0 564 726 A1**
(43) Date of publication of application: **13.10.1993**
(21) Application number: 92303065.4
(22) Date of filing: 07.04.1992
(51) Int. Cl.: H02J 7/10, H02J 7/02

(54) **A different converting type charging circuit**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present invention relates to a differential converting type charging circuit comprising differential actuating type active switch device being controlled by differential setting circuit in company with drop type current detection device, capacitor and commutating inductance that allows relatively to control differential active switch device based on the potential of reference drop type current detection device being controlled by differential setting circuit and the potential of capacitor, to enable each end of capacitor to appear a steady potential and to charge a store battery through commutating type inductance; said differential converting type charging circuit can be applied to discontinuous pulse DC power supply or continuous DC power supply wherein solid thyristor being used as active switch device is applicable to discontinuous pulse DC power supply, and power crystal being used as active switch device is applicable to continuous DC power supply or discontinuous pulse DC power supply. The advantage of said circuit is to free from the influence by pulse value of DC power supply but provide a low ripple charging to the store battery so as to promote efficiency.

## Description

### SUMMARY OF THE INVENTION

The present invention relates to a differential converting type charging circuit comprising differential actuating type active switch device being controlled by differential setting circuit in company with drop type current detection device, capacitor and commutating inductance that allows relatively to control differential active switch device based on the potential of reference drop type current detection device being controlled by differential setting circuit and the potential of capacitor, to enable each end of capacitor to appear a steady potential and to charge a store battery through commutating type inductance; said differential converting type charging circuit can be applied to discontinuous pulse DC power supply or continuous DC power supply wherein solid thyristor being used as active switch device is applicable to discontinuous pulse DC power supply, and power crystal being used as active switch device is applicable to continuous DC power supply or discontinuous pulse DC power supply. The advantage of said circuit is to free from the influence by pulse value of DC power supply but provide a low ripple charging to the store battery so as to promote efficiency.

### BRIEF DESCRIPTION OF THE DRAWINGS

FIG. 1 is an embodiment showing the differential converting type charging circuit according to the present invention.

FIG. 2 is an embodiment showing the drop type current detection device comprising resistance device parallel with capacitor.

FIG. 3 is an embodiment showing the drop type current detection device comprising inductance device or inductance and resistance device parallel with flyer diode.

FIG. 4 is an embodiment the semi-wave type circuit of differential converting type charging circuit according to the present invention.

### DETAILED DESCRIPTION OF THE INVENTION

The conventional store battery in general is charged by local AC power supply after having been commutated. However, the charge against store battery is involved in following characteristics: (1) to reduce charging current properly and gradually instead of reducing sharply (2) a proper voltage difference with store battery (about 1.35 times) (3) to maintain effective charging at a longer duration.

To conform to Item (1) we often make charging current be reduced properly and gradually instead of reducing sharply through a gradually rising voltage as Item (2) not more than a 1.35 times difference. To maintain much more effective charging time the less the ripple wave of power supply shall be better. To conform to foregoing requirement we used to commutate pulse DC and then filter through various type of circuit filter and again apply active device for series or parallel linear voltage adjustment. However, such kind of circuit has a multitude of parts to increase the production cost.

Said differential converting type charging circuit comprises differential actuating type active switch device being controlled by differential setting circuit in company with drop type current detection device, capacitor and commutating inductance that allows relatively to control differentialactive switch device based on the potential of reference drop type current detection device being controlled by differential setting circuit and the potential of capacitor, to enable each end of capacitor to appear a steady potential and to charge a store battery through commutating type inductance; and to charge a store battery through commutating type inductance; said differential converting type charging circuit can be applied to discontinuous pulse DC power supply or continuous DC power supply wherein solid thyristor being used as active switch device is applicable to discontinuous pulse DC power supply, and power crystal being used as active switch device is applicable to continuous DC power supply or discontinuous pulse DC power supply. The advantage of said circuit is to free from the influence by pulse value of DC power supply but provide a low ripple charging to the store battery so as to promote efficiency.

The embodiment is thus described accompanying with the drawings as follows:

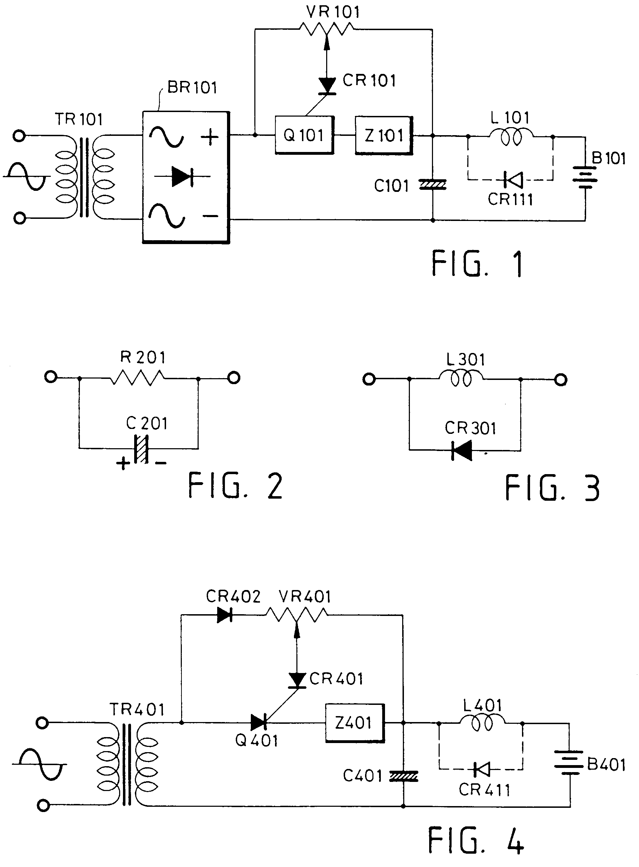

FIG. 1 is the embodiment showing said differential converting type charging circuit according to the present invention wherein it including:
a transformer TR101 for converting voltage value of local AC power supply into required voltage and transmitting it to AC end of bridge type commutation BR101;
a bridge type commutation BR101 for converting AC into pulse DC;
an active switch device Q101 for input of DC positive voltage from input end and being controlled by differential setting circuit, and leading to drop type current detection device Z101 from output end, and then leading to joint end between capacitor C101 and commutating type inductance L101; said active switch device Q101 comprising solid thyristor SCR or power crystal being positively series with diode wherein active switch device comprising solid thyristor SCR is applicable to discontinuous pulse DC power supply, and the active switch device comprising power cyrstal is applicable to continuous DC power supply and discontinuous pulse DC power supply;
a differential setting circuit is the adjusting point (or intermediate connection of at least two set of series fixed resistances) of variable resistance VR101 in series connecting a diodee CR101 (or Zener diode) to the control PIN of active switch device Q101; if active switch device is a thyristor said control PIN is the gate of thyristor; if the active switch device is power crystal said control PIN is the base electrode (PIN B) of power crystal;
a capacitor C101 is in parallel connected to the output end of drop type current detection device Z101 and negative end of power supply for storing energy and reducing ripple value;
a drop type current detection device Z101 comprising resistance device R201 in parallel connected to the capacitor C201 (as FIG. 2) or inductance or inductance-resistance type device L301 in parallel connected to flyer diode CR301 (as FIG. 3) in order to postpone differential setting circuit actuating the active switch device when charging current is greater to produce bigger drop;
a commutating type inductance L101 is in series connected between drop type current detection device Z101 and store battery B101 so as to reduce ripple value of charging current, and in parallel connecting flyer diode CR111 subject to the requirement;
a store battery B101 is in parallel connected to the output end of commutating type inductance L101 and negative end of power supply.

Above-mentioned circuit is provided to form a regulating power volume on the capacitor, and voltage value is discharging against store battery through commutating type inductance, and residual voltage is thus formed at each end of differential setting circuit at voltage difference value of each power supply pulse cycle, and when differential value is greater it may switch on active switch device so as to increase charging time; while drop type current detection device produces drop subject to the value of current; for said drop value, if inductance exists at adequate time, it may shorten charging time for the capacitor at subsequent cycle and adjust charging current.

For practical application, we may construct the circuit of said function through comparatively easy semi-wave power supply. As FIG. 4 it is an embodiment showing the semi-wave circuit of differential converting type charging circuit wherein:
a transformer TR401 for converting voltage value of local AC power supply into required voltage;
an active switch device Q401 for input of DC positive voltage from input end and being controlled by differential setting circuit, and leading to drop type current detection device Z401 from output end, and then leading to joint end between capacitor C401 and commutating type inductance L401; said active switch device Q401 comprising solid thyristor SCR or power crystal being positively series with diode wherein active switch device comprising solid thyristor SCR is applicable to discontinuous pulse DC power supply, and the active switch device comprising power cyrstal is applicable to continuous DC power supply and discontinuous pulse DC power supply;
a differential setting circuit is the adjusting point (or intermediate connection of at least two set of series fixed resistances) of diode CR402 and variable resistance VR401 in series connecting a diode CR401 (or Zener diode) to the control PIN of active switch device Q401, i.e. the gate of thyristor or base electrode (PIN B) of power crystal;
a capacitor C401 is in parallel connected to the output end of drop type current detection device Z401 and negative end of power supply for storing energy and reducing ripple value;
a drop type current detection device Z401 comprising resistance device in parallel connected to the capacitor or inductance or inductance-resistance type device in parallel connected to flyer diode in order to postpone differential setting circuit actuating the active switch device when charging current is greater to produce bigger drop;
a commutating type inductance L401 is in series connected between drop type current detection device Z401 and store battery B401 so as to reduce ripple value of charging current, and in parallel connecting flyer diode CR411 subject to the requirement;
a store battery B401 is in parallel connected to the output end of commutating type inductance L401 and negative end of power supply.

The process of action of above-mentioned circuit is similar to the kind of full wave and only the frequency of electrical energy replenished is adjusted by half comparing to full wave.

To conclude the above-mentioned description, said differential converting type charging current is effective to provide low ripple, high efficiency, to economize production cost, and has the characteristics of charging with charging current gradually reduced. The present invention has met the requirement of a new utility model. Your examination with approval in accordance with the law will be highly appreciated.

## Claims

1. a differential converting type charging circuit comprising differential actuating type active switch device being controlled by differential setting circuit in company with drop type current detection device, capacitor and commutating inductance that allows relatively to control differential active switch device based on the potential of reference drop type current detection device being controlled by differential setting circuit and the potential of capacitor, to enable each end of capacitor to appear a steady potential and to charge a store battery through commutating type inductance; said differential converting type charging circuit can be applied to discontinuous pulse DC power supply or continuous DC power supply wherein solid thyristor being used as active switch device is applicable to discontinuous pulse DC power supply, and power crystal being used as active switch device is applicable to continuous DC power supply or discontinuous pulse DC power supply; the advantage of said circuit is to free from the influence by pulse value of DC power supply but provide a low ripple charging to the store battery so as to promote efficiency.

2. The differential converting type charging circuit according to claim 1 comprising:
a transformer TR101 for converting voltage value of local AC power supply into required voltage and transmitting it to AC end of bridge type commutation BR101;
a bridge type commutation BR101 for converting AC into pulse DC;
an active switch device Q101 for input of DC positive voltage from input end and being controlled by differential setting circuit, and leading to drop type current detection device Z101 from output end, and then leading to joint end between capacitor C101 and commutating type inductance L101; said active switch device Q101 comprising solid thyristor SCR or power crystal being positively series with diode wherein active switch device comprising solid thyristor SCR is applicable to discontinuous pulse DC power supply, and the active switch device comprising power cyrstal is applicable to continuous DC power supply and discontinuous pulse DC power supply;
a differential setting circuit is the adjusting point (or intermediate connection of at least two set of series fixed resistances) of variable resistance VR101 in series connecting a diodee CR101 (or Zener diode) to the control PIN of active switch device Q101; if active switch device is a thyristor said control PIN is the gate of thyristor; if the active switch device is power crystal said control PIN is the base electrode (PIN B) of power crystal;
a capacitor C101 is in parallel connected to the output end of drop type current detection device Z101 and negative end of power supply for storing energy and reducing ripple value;
a drop type current detection device Z101 comprising resistance device R201 in parallel connected to the capacitor C201 (as FIG. 2) or inductance or inductance-resistance type device L301 in parallel connected to flyer diode CR301 (as FIG. 3) in order to postpone differential setting circuit actuating the active switch device when charging current is greater to produce bigger drop;
a commutating type inductance L101 is in series connected between drop type current detection device Z101 and store battery B101 so as to reduce ripple value of charging current, and in parallel connecting flyer diode CR111 subject to the requirement;
a store battery B101 is in parallel connected to the output end of commutating type inductance L101 and negative end of power supply.

3. The differential converting type charging circuit according to claim 1, further being allowed to constructed by a semi-wave circuit, comprising:
a transformer TR401 for converting voltage value of local AC power supply into required voltage;
an active switch device Q401 for input of DC positive voltage from input end and being controlled by differential setting circuit, and leading to drop type current detection device Z401 from output end, and then leading to joint end between capacitor C401 and commutating type inductance L401;
said active switch device Q401 comprising solid thyristor SCR or power crystal being positively series with diode wherein active switch device comprising solid thyristor SCR is applicable to discontinuous pulse DC power supply, and the active switch device comprising power cyrstal is applicable to continuous DC power supply and discontinuous pulse DC power supply;
a differential setting circuit is the adjusting point (or intermediate connection of at least two set of series fixed resistances) of diode CR402 and variable resistance VR401 in series connecting a diode CR401 (or Zener diode) to the control PIN of active switch device Q401, i.e. the gate of thyristor or base electrode (PIN B) of power crystal;
a capacitor C401 is in parallel connected to the output end of drop type current detection device Z401 and negative end of power supply for storing energy and reducing ripple value;
a drop type current detection device Z401 comprising resistance device in parallel connected to the capacitor or inductance or inductance-resistance type device in parallel connected to flyer diode in order to postpone differential setting circuit actuating the active switch device when charging current is greater to produce bigger drop;
a commutating type inductance L401 is in series connected between drop type current detection device Z401 and store battery B401 so as to reduce ripple value of charging current, and in parallel connecting flyer diode CR411 subject to the requirement;
a store battery B401 is in parallel connected to the output end of commutating type inductance L401 and negative end of power supply.
The process of action of above-mentioned circuit is similar to the kind of full wave and only the frequency of electrical energy replenished is adjusted by half comparing to full wave.
